# EUROPÄISCHE PATENTANMELDUNG

(11) **EP 4 837 939 A2**
(43) Veröffentlichungstag der Anmeldung: **11.11.2026**
(21) Anmeldenummer: 26190209.2
(22) Anmeldetag: 24.02.2017
(51) Int. Cl.: C09D 5/02

(54) **DISPERSIONSFARBE**

(30) Priorität: 26.02.2016 DE 102016002221
(62) Dokumentnummer(n) der früheren Anmeldung(en) nach Art. 76 EPÜ: 23170429.7 / 4 239 030; 17707304.6 / 3 420 038
(71) Anmelder: Brillux GmbH & Co. KG, 48163 Münster (DE)
(72) Erfinder: Hörsting, Ingo, 48317 Drensteinfurt (DE); Leusmann, Jan, 48301 Nottuln (DE)
(74) Vertreter: Cohausz & Florack

(57) **Zusammenfassung**

Dargestellt und beschrieben wird eine Dispersionsfarbe enthaltend, jeweils bezogen auf das Gesamtgewicht der Dispersionsfarbe, a) 1 bis 15 Gew.-% Pigment, b) 30 bis 60 Gew.-% Füllstoff, c) 1 bis 25 Gew.-% Polymer, d) 0,1 bis 3,5 Gew.-% Alkalimetallalkylsilikonat, e) 25 bis 70 Gew.-% Wasser, wobei der pH Wert der Dispersionsfarbe von 10 bis 12 beträgt. Ferner ist ein Herstellungsverfahren für die Dispersionsfarbe beschrieben. Die Dispersionsfarbe eignet sich für die Verwendung im Innen- und/oder Außenbereich.

## Beschreibung

Die vorliegende Erfindung betrifft eine Dispersionsfarbe, ein Verfahren zur Herstellung der Dispersionsfarbe, die Verwendung der Dispersionsfarbe sowie die Verwendung von Alkalimetallalkylsilikonaten zur Stabiliserung von Dispersionsfarben.

Für die Beschichtung von Untergründen sind verschiedene Beschichtungsmittel bekannt. Neben Silikatfarben gibt es unter anderem Dispersions-Silikatfarben und Kunststoffdispersionsfarben.

Silikatfarben sind zweikomponentige Farben, die keine organischen Bestandteile enthalten. Die beiden Hauptkomponenten der Silikatfarben sind Wasserglas und ein wasserglasbeständiges Pigment. Silikatfarben werden üblicherweise unmittelbar vor dem Aufbringen durch Zusammengeben der beiden Hauptkomponenten angerührt. Daher erfordern Silikatfarben mehrere Arbeitsschritte, und ihre Verarbeitung ist allgemein schwierig und erfordert viel Erfahrung.

In den Dispersions-Silikatfarben nach DIN 18363 sind zusätzlich zum Wasserglas und dem wasserglasbeständigen Pigment noch bis zu 5 Gew.-% organische Bestandteile, bezogen auf die Gesamtmenge an Dispersions-Silikatfarbe, enthalten. Als organische Bestandteile werden vor allem Kunstharzdispersionen verwendet. Zusätzlich können auch weitere Stoffe wie Hydrophobierungsmittel enthalten sein. Durch den Einsatz von Kunstharzdispersionen ist es möglich, die Dispersions-Silikatfarben als Einkomponentensysteme anzubieten.

Sowohl Silikatfarben als auch Dispersions-Silikatfarben weisen üblicherweise einen sehr stark alkalischen pH Wert von bis zu 13 auf, der aufwändigere Vorkehrungen bezüglich des Arbeitsschutzes erfordert.

Kunststoffdispersionsfarben, auch bekannt als Dispersionsfarben, enthalten üblicherweise relativ große Mengen an organisch-chemischen Bestandteilen, insbesondere an Kunstharzen wie Polymere, insbesondere in Form von Kunstharzdispersionen. Um eine ausreichende Lagerstabilität zu gewährleisten, benötigen Dispersionsfarben üblicherweise Konservierungsmittel wie zum Beispiel Isothiazoline. Diese können jedoch insbesondere bei Allergikern Reizungen und Hautirritationen hervorrufen.

Die EP 1 297 079 B1 beschreibt eine Dispersionsfarbe enthaltend Polymerdispersion, Pigment und/oder Füllstoff, Wasserglas und Wasser. Diese Dispersionsfarbe zeichnet sich dadurch aus, dass sie keine Konservierungsmittel benötigt. Jedoch ist durch das Vorhandensein von Wasserglas zusätzlich ein anorganisches Bindemittel enthalten, wodurch die Eigenschaften der Dispersionsfarbe, insbesondere ihre Verarbeitbarkeit beeinträchtigt werden können.

Die DE 1 031 910 beschreibt eine Alkydharzemulsionsfarbe enthaltend Titandioxid, Füllstoffe, ein Alkydharz und Wasser. Dieser Farbe wird umittelbar vor der Anwendung Natriummethylsilikonat zugegeben, wodurch die modifizierte Farbe bessere Abwascheigenschaften aufweist als Alkydharzemulsionsfarben ohne Natriummethylsilikonat. Die DE 1 031 910 macht keine Aussage über den pH Wert der Alkydharzemulsionsfarbe, ihre Lagerstabilität oder über das Vorhandensein von Konservierungsmitteln. Weiterhin ist eine Alkydharzemulsionsfarbe enthaltend Natriummethylsilikonat zur Lagerung nach der DE 1 031 910 nicht vorgesehen.

Ausgehend vom voranstehend erläuterten Stand der Technik bestand eine Aufgabe der Erfindung darin, eine Dispersionsfarbe bereitzustellen, die im Wesentlichen frei von Konservierungsmitteln ist, eine gute Lagerfähigkeit aufweist und/oder gut verarbeitbar ist.

Alle oder einige dieser Aufgaben werden erfindungsgemäß durch die Dispersionsfarbe von Punkt 1, das Verfahren nach Punkt 11, die Verwendung nach Punkt 13 sowie die Verwendung nach Punkt 14 gelöst.

Vorteilhafte Ausgestaltungen der Erfindung sind in den abhängigen Punkten angegeben und werden nachfolgend im Einzelnen erläutert.

Die erfindungsgemäße Dispersionsfarbe weist einen pH Wert von 10 bis 12 auf und enthält, jeweils bezogen auf das Gesamtgewicht der Dispersionsfarbe, folgende Bestandteile:
a. 1 bis 15 Gew.-% Pigment,
b. 30 bis 60 Gew.-% Füllstoff,
c. 1 bis 25 Gew.-% Polymer,
d. 0,1 bis 3,5 Gew.-% Alkalimetallalkylsilikonat,
e. 25 bis 70 Gew.-% Wasser.

Überraschend hat sich gezeigt, dass durch Kombination von 1 bis 15 Gew.-% Pigment mit 30 bis 60 Gew.-% Füllstoff, 1 bis 25 Gew.-% Polymer, 0,1 bis 3,5 Gew.-% Alkalimetallalkylsilikonat und 25 bis 70 Gew.-% Wasser in einer Dispersionsfarbe mit einem pH Wert von 10 bis 12 eine Dispersionsfarbe erhalten wird, in der die Komponenten eine ausgezeichnete Kompatibilität untereinander aufweisen. Dadurch haben Oberflächen, die mit der erfindungsgemäßen Dispersionsfarbe beschichtet wurden, ein homogeneres Aussehen. Dies äußert sich insbesondere darin, dass die Oberflächen, die mit der erfindungsgemäßen Dispersionsfarbe beschichtet wurden, sich sehr gleichmäßig durch guten Verlauf darstellen. Dadurch lässt sich die erfindungsgemäße Dispersionsfarbe hervorragend verarbeiten. Weiterhin hat sich gezeigt, dass die erfindungsgemäße Dispersionsfarbe auch ohne Konservierungsmittel nach einer Lagerzeit von mehreren Wochen keine Verfärbungen aufweist. Schließlich wurde gefunden, dass der pH Wert der erfindungsgemäßen Dispersionsfarbe über eine Lagerzeit von mehreren Wochen im Wesentlichen konstant blieb.

Ohne an eine bestimmte Theorie gebunden sein zu wollen, scheint das Alkalimetallalkylsilikonat zum Einen die Dispersionsfarbe, insbesondere den pH Wert der Dispersionsfarbe, zu stabilisieren und zum Anderen für eine gute Kompatibilität der Komponenten zu sorgen. Dabei wirkt das Alkalimetallalkylsilikonat offenbar als pH Wert Puffer. Das Vorhandensein von ausschließlich organischen Bindemitteln scheint beim pH Wert der Dispersionsfarbe eine gute Kompatibilität zwischen den Komponenten zu begünstigen. Diese Wirkung war angesichts der in der DE 1 031 910 erwähnten erforderlichen Zusätze für Alkalimetallalkylsilikonatlösungen mit Konzentrationen von bis zu 40% der Zusätze zur Erhöhung der Lagerstabilität der Alkalimetallalkylsilikonatlösungen nicht vorhersehbar.

Als Dispersionsfarben im Sinne der Erfindung kommen insbesondere Dispersions-Innenfarben, Dispersions-Außenfarben, Silikonharzfarben sowie Putze auf Dispersionsbasis, einschließlich Innen- und Außenputzen, in Betracht.

Alkalimetallalkylsilikonate gemäß der Erfindung sind insbesondere Verbindungen mit der Formel MOSi(R)(OH)₂, wobei M ein Alkalimetall und R ein Alkylrest ist. Alkalimetallalkylsilikonate können beispielsweise durch Umsetzen von Alkylsilantriol mit einem Alkalimetallhydroxid erhalten werden. Die Herstellung von Lösungen von Akalimetallalkylsilikonaten, insbesondere wässrigen Lösungen, ist beispielsweise in der DE 1 031 910 beschrieben.

In den Verbindungen MOSi(R)(OH)₂, die für das erfindungsgemäße Alkalimetallalkylsilikonat in Frage kommen, kann das Alkalimetall M insbesondere ausgewählt sein aus der Gruppe bestehen aus Lithium, Natrium, Kalium und Mischungen davon. Der Alkylrest R ist vorzugsweise ausgewählt aus der Gruppe bestehend aus Methyl-, Ethyl-, n-Propyl-, iso-Propyl-, n-Butyl-, iso-Butyl-, tert-Butyl, n-Pentyl-, iso-Pentyl-, tert-Pentyl-, Neopentyl-, Phenyl-, Aryl-, und Cyclohexyl-.

Bevorzugt ist der Alkylrest Methyl-. Weiter bevorzugt ist das Alkalimetallalkylsilikonat der erfindungsgemäßen Dispersionsfarbe ausgewählt aus der Gruppe bestehend aus Litiummethylsilikonat, Natriummethylsilikonat und Kaliummethylsilikonat. Am bevorzugtesten ist das Alkalimetallalkylsilikonat Kaliummethylsilikonat. Diese Alkalimetallalkylsilikonate, insbesondere Kaliummethylsilikonat ergeben homogene Oberflächen und sind gut handhabbar.

Das Alkalimetallalkylsilikonat ist in der erfindungsgemäßen Dispersionsfarbe in einer Menge von 0,1 bis 3,5 Gew.-% enthalten, bezogen auf das Gesamtgewicht der Dispersionsfarbe. Bevorzugt enthält die erfindungsgemäße Dispersionsfarbe 0,1 bis 2 Gew.-%, insbesondere 0,3 bis 2 Gew.-% oder 0,5 bis 1,5 Gew.-%, Alkalimetallalkylsilikonat, jeweils bezogen auf das Gesamtgewicht der Dispersionsfarbe. Dispersionsfarben mit diesen Gehalten zeigen eine gute Verarbeitbarkeit und eine gute Lagerstabilität.

Erfindungsgemäß enthält die Dispersionsfarbe 1 bis 15 Gew.-% Pigment. Als Pigment kommen verschiedene Substanzen in Frage. Bevorzugt ist das Pigment ausgewählt aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon. Gemäß einer bevorzugten Ausführungsform der Erfindung enthält die Dispersionsfarbe 3 bis 13 Gew.-% Pigment, weiter bevorzugt 5 bis 12 Gew.-% Pigment.

Gemäß einer Ausführungsform werden bevorzugt anorganische Pigmente eingesetzt. Beispiele für anorganische Pigmente sind Oxide wie Titandioxid, Eisenoxide, z.B. P.Y. 42, P.R. 101, P.Bk. 11, Chromoxidgrün, z.B. P.G. 17, Mischphasenpigmente z.B. Cobaltoxide Blau P.B. 28 und Grün P.G. 50, Bismutvanadat P.Y. 184, Rutil-Zinn-Zink P.O. 216, Silikate, z.B. Ultramarinblau P.B. 29 und Kohlenstoff, z.B. Ruß P.Bk. 7.

Gemäß einer weiteren Ausführungsform werden bevorzugt organische Pigmente eingesetzt. Beispiele für organische Pigmente sind Azopigmente, z.B. Arylidgelb (Monoazo) P.Y. 74, Polycyclische Pigmente, z.B. Chinacridone P.R. 122, Perinone P.O. 43, Pyrazolo-Chinazolon P.O. 67, Diketo-Pyrrolo-Pyrrol (DPP) P.R. 254, Dioxazine P.V. 23 und Metallkomplexpigmente, z.B. Kupferphthalocyanine Blau P.B. 15:3 und Grün P.G. 7.

Die für die Beispiele verwendeten Bezeichnungen der anorganischen und organischen Pigmente entsprechen den Generic Names des Colour Index der British Society of Dyers and Colourists.

Gemäß einer weiteren Ausführungsform werden Mischungen von anorganischen und organischen Pigmenten eingesetzt.

Durch die Verwendung der angeführten Pigmente können farbige Dispersionsfarben hergestellt werden, die im Wesentlichen das ganze Farbspektrum abdecken.

Neben den Komponenten Pigment, Polymer, Alkalimetallalkylsilikonat und Wasser enthält die erfindungsgemäße Dispersionsfarbe Füllstoff. Bevorzugt ist der Füllstoff ausgewählt aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon. Weiter bevorzugt ist der Füllstoff eine Mischung aus mindestens Calciumcarbonat und Kaolin. Derartige Füllstoffe ergeben Dispersionsfarben mit einer guten Verarbeitbarkeit.

Calciumcarbonat kann dabei in verschiedener Form, beispielsweise in Form von Kreide oder Calcit eingesetzt werden.

Praktische Versuche haben ergeben, dass Dispersionsfarben, die besonders homogene Beschichtungen ergeben, erhalten werden, wenn die Füllstoffpartikel klein sind.

Vorteilhafterweise weisen die Füllstoffpartikel der erfindungsgemäßen Dispersionsfarbe eine Größe von weniger als 100 µm, insbesondere weniger als 80 µm, bevorzugt von 0,1 bis 50 µm, weiter bevorzugt von 1 bis 30 µm auf. Verfahren zur Bestimmung der Partikelgröße sind dem Fachmann bekannt. Beispielsweise kann die Partikelgröße mittels Grindometer nach DIN EN ISO 1524, insbesondere nach DIN EN ISO 1524:2013-06, bestimmt werden. Dabei bezieht sich die Partikelgröße der Füllstoffe insbesondere auf die maximale Agglomeratgröße in der Dispersionsfarbe. Ferner kann die Partikelgröße, insbesondere die Partikelgrößenverteilung, auch mittels Transmissionselektronenmikroskopie bestimmt werden.

Der pH Wert der Dispersionsfarbe beträgt erfindungsgemäß von 10 bis 12, bevorzugt von 10,5 bis 11,5. Es wurde gefunden, dass Dispersionsfarben mit den angegebenen pH Werten auch bei einer Lagerung über mehrere Wochen keine oder nur geringfügige Verfärbungen aufweisen, selbst wenn sie im Wesentlichen frei von Konservierungsmitteln waren. Noch weiter bevorzugt beträgt der pH Wert der Dispersionsfarbe von 10,5 bis 11,4. Erfindungsgemäße Dispersionsfarben mit derartigen pH Werten hatten den zusätzlichen Vorteil, auch ohne besondere Vorkehrungen hinsichtlich des Arbeitsschutzes verwendet werden zu können.

Der pH Wert kann beispielsweise durch Zugabe von alkalischen Substanzen, auch Alkalisteller genannt, eingestellt werden. Beispiele für alkalische Substanzen sind Alkalimetallhydroxide wie Litihium-, Natrium- und/oder Kaliumhydroxid, Erdalkalimetallhydroxide wie Magnesium-, Calcium-, und/oder Bariumhydroxid, Ammoniumhydroxid, Xonotlit (6CaO·6SiO₂·H₂O) und/oder Ittringit (Ca₆[Al(OH)₆]₂(SO₄ x 26 H₂O)). Das Xonotlit weist vorzugsweise ein monoklines Kristallsystem auf (Xonotlit-monoklin). Es hat sich gezeigt, dass Xonotlit und/oder Ittringit in besonders vorteilhafter Weise in Kombination mit dem in der erfindungsgemäßen Dispersionsfarbe enthaltenen Alkalimetallalkylsilikonat eingesetzt werden können. Insbesondere weisen Dispersionsfarben, die neben Alkalimetallalkylsilikonat Xonotlit und/oder Ittringit als Alkalisteller enthalten, eine erhöhte pH-Stabilität auf. Gemäß einer bevorzugten Ausführungsform der Erfindung enthält die erfindungsgemäße Dispersionsfarbe neben Alkalimetallalkylsilikonat Alkalisteller in einer Menge von 0,005 bis 3 Gew.%, insbesondere von 0,01 bis 1 Gew.%, bezogen auf die Gesamtzusammensetzung der Dispersionsfarbe. Insbesondere kann die erfindungsgemäße Dispersionsfarbe 0,005 bis 3 Gew.%, insbesondere von 0,01 bis 1 Gew.%, Xonotlit und/oder Ittringit, bezogen auf die Gesamtzusammensetzung der Dispersionsfarbe, enthalten.

Gemäß einer Ausführungsform der Erfindung bleibt der pH Wert der erfindungsgemäßen Dispersionsfarbe über einen Zeitraum von mindestens 4 Wochen, bevorzugt mindestens 8 Wochen, weiter bevorzugt mindestens 12 Wochen, noch weiter bevorzugt mindestens 16 Wochen, noch weiter bevorzugt mindestens 20 Wochen, im Wesentlichen konstant.

Erfindungsgemäß enthält die Dispersionsfarbe 1 bis 25 Gew.-% Polymer, bezogen auf das Gesamtgewicht der Dispersionsfarbe. Bevorzugt enthält die Dispersionsfarbe 2 bis 23 Gew.-%, weiter bevorzugt 4 bis 20 Gew.-%, Polymer jeweils bezogen auf das Gesamtgewicht der Dispersionsfarbe. Die Angaben bezüglich des Gehalts an Polymer in der Dispersionsfarbe beziehen sich jeweils auf das Polymer als Feststoffanteil. Bevorzugt wird das Polymer bei der Herstellung einer Dispersionsfarbe jedoch in Form einer Dispersion, insbesondere einer wässrigen Dispersion, zugegeben. Vorteilhafterweise enthalten diese Polymerdispersionen, insbesondere die wässrigen Polymerdispersionen, 40 bis 70 Gew.-%, bevorzugt 45 bis 60 Gew.-%, weiter bevorzugt 45 bis 55 Gew.-%, Polymer. Wird das Polymer als wässrige Polymerdispersion zugegeben, wird das Wasser der Polymerdispersion als Teil des gesamten Wassergehalts der Dispersionsfarbe gerechnet. Dispersionsfarben enthaltend Polymer in diesen Mengen haben gute Verarbeitungseigenschaften gezeigt.

Als Polymer der Dispersionsfarbe kommen verschiedene Polymere in Frage. Bevorzugt enthält das Polymer der erfindungsgemäßen Dispersionsfarbe mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester. Besonders bevorzugt enthält das Polymer der Dispersionsfarbe mindestens ein Polymer auf Basis von Acrylsäurederivaten und/oder Styrol. Bei Verwendung von Acrylsäureestern und/oder Methacrylsäureestern ist es bevorzugt, dass der Alkoholrest 1 bis 12 Kohlenstoffatome enthält. Der Alkoholrest kann ferner verzweigt oder unverzweigt sein. Gemäß einer bevorzugten Ausführungsform besteht das Polymer der Dispersionsfarbe aus mindestens einem der vorgenannten Polymere und/oder Copolymere.

Die erfindungsgemäße Dispersionsfarbe kann zudem als weitere Additive Dispergier-, Netz-, Verdickungsmittel, Stabilisatoren, Entschäumer und/oder Hydrophobierungsmittel enthalten.

Beispiele für Verdickungsmittel sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Polyurethane, Alkalimetallphosphate und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobiermittel sind insbesondere oligomere und polymere Siloxane und Silikonharze.

Gemäß einer bevorzugten Ausführungsform ist die erfindungsgemäße Dispersionsfarbe im Wesentlichen frei von Konservierungsmitteln, insbesondere von Isothiazolinen.

Die Erfindung stellt ferner ein Verfahren zur Herstellung der erfindungsgemäßen Dispersionsfarbe bereit, umfassend die Schritte
a. Bereitstellen einer Zusammensetzung enthaltend, jeweils bezogen auf das Gesamtgewicht der Dispersionsfarbe,
   i. 1 bis 15 Gew.-% Pigment,
   ii. 30 bis 60 Gew.-% Füllstoff,
   iii. 1 bis 25 Gew.-% Polymer,
   iv. 0,1 bis 3,5 Gew.-% Alkalimetallalkylsilikonat,
   v. 25 bis 70 Gew.-% Wasser,
b. Dispergieren der in a. genannten Komponenten,
c. Einstellen des pH Wertes auf einen Wert von 10 bis 12.

Die angeführten Schritte können in beliebiger Reihenfolge durchgeführt werden, vorzugsweise werden sie in der angegebenen Reihenfolge durchgeführt.

Das im Zusammenhang mit der erfindungsgemäßen Dispersionsfarbe zum Alkalimetallalkylsilikonat Gesagte gilt gleichermaßen auch für das Alkalimetallalkylsilikonat des erfindungsgemäßen Verfahrens.

Das im Zusammenhang mit der erfindungsgemäßen Dispersionsfarbe zum Pigment Gesagte gilt gleichermaßen auch für das Pigment des erfindungsgemäßen Verfahrens.

Das im Zusammenhang mit der erfindungsgemäßen Dispersionsfarbe zum Füllstoff Gesagte gilt gleichermaßen auch für den Füllstoff des erfindungsgemäßen Verfahrens.

Das im Zusammenhang mit der erfindungsgemäßen Dispersionsfarbe zum pH Wert sowie zur alkalischen Substanz Gesagte gilt gleichermaßen auch für den pH Wert sowie für die alkalische Substanz des erfindungsgemäßen Verfahrens.

Das im Zusammenhang mit der erfindungsgemäßen Dispersionsfarbe zum Polymer Gesagte gilt gleichermaßen auch für das Polymer des erfindungsgemäßen Verfahrens.

Die erfindungsgemäße Dispersionsfarbe ist für verschiedene Verwendungen geeignet. Insbesondere eignet sie sich für die Verwendung im Innen- und/oder Außenbereich.

Die Erfindung betrifft ebenfalls die Verwendung von Alkalimetallalkylsilikonaten, insbesondere von Kaliummethylsilikonat, zur Stabilisierung von Dispersionsfarben.

Die Erfindung wird im Folgenden durch Beispiele näher erläutert, die jedoch nur der Veranschaulichung dienen und nicht limitierend sind.

### BEISPIELE

Dispersionsfarben mit den folgenden, in Tabelle 1 wiedergegebenen Formulierungen wurden hergestellt durch Mischen der in Tabelle 1 angegebenen Bestandteile, dosierte Angaben jeweils in Gew.-%.

**Tabelle 1**

| **Bestandteil** | **Formulierung A** | **Formulierung B** |
|---|---|---|
| Titandioxid | 6 | 11 |
| Styrolacrylat (50 Gew.-% in Wasser) | 19 | 11 |
| Kaliummethylsilikonat | 1 | 1,5 |
| Calciumcarbonat | 21,7 | 32,5 |
| Kaolin | 20,8 | 8 |
| Alkalische Verbindung | 0,05 | 0,5 |
| Entschäumer | 0,2 | 0,28 |
| Verdicker | 0,5 | 0,75 |
| Netzmittel | 0,46 | 0,3 |
| Wasser | 30,29 | 34,17 |
| pH Wert | 11,3 | 11,4 |

Die Formulierungen A und B zeigten eine Lagerstabilität von mehr als 6 Monaten ohne Verfärbungen und ließen sich gut verarbeiten. Insbesondere zeigten die Formulierungen eine gute Verarbeitbarkeit und ergaben nach dem Auftragen Oberflächen mit einem homogenen Gesamteindruck. Der pH Wert betrug für Formulierung A nach 6 Monaten 11,3, für Formulierung B 11,4.

Die in den nachfolgenden Punkten beschriebenen Gegenstände stellen weitere Ausführungsformen der Erfindung dar:
1. Dispersionsfarbe enthaltend, jeweils bezogen auf das Gesamtgewicht der Dispersionsfarbe,
   a. 1 bis 15 Gew.-% Pigment,
   b. 30 bis 60 Gew.-% Füllstoff,
   c. 1 bis 25 Gew.-% Polymer,
   d. 0,1 bis 3,5 Gew.-% Alkalimetallalkylsilikonat,
   e. 25 bis 70 Gew.-% Wasser,
   wobei der pH Wert der Dispersionsfarbe von 10 bis 12 beträgt.
2. Dispersionsfarbe nach Punkt 1, **dadurch gekennzeichnet, dass** sie 0,1 bis 2 Gew.-%, insbesondere 0,3 bis 2 Gew.-% oder 0,5 bis 1,5 Gew.-%, jeweils bezogen auf das Gesamtgewicht der Dispersionsfarbe, Alkalimetallalkylsilikonat enthält.
3. Dispersionsfarbe nach Punkt 1 oder 2, **dadurch gekennzeichnet, dass** das Alkalimetallalkylsilikonat Kaliummethylsilikonat ist.
4. Dispersionsfarbe nach einem der vorstehenden Punkte, **dadurch gekennzeichnet, dass** das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon.
5. Dispersionsfarbe nach einem der vorstehenden Punkte, **dadurch gekennzeichnet, dass** der Füllstoff ausgewählt ist aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon.
6. Dispersionsfarbe nach einem der vorstehenden Punkte, **dadurch gekennzeichnet, dass** der Füllstoff eine Mischung aus mindestens Calciumcarbonat und Kaolin ist.
7. Dispersionsfarbe nach einem der vorstehenden Punkte, **dadurch gekennzeichnet, dass** der pH Wert der Dispersionsfarbe von 10,5 bis 11,5, insbesondere von 10,5 bis 11,4, beträgt.
8. Dispersionsfarbe nach einem der vorstehenden Punkte, **dadurch gekennzeichnet, dass** der pH Wert der Dispersionsfarbe über einen Zeitraum von mindestens 4 Wochen, insbesondere mindestens 8 Wochen oder mindestens 12 Wochen oder mindestens 16 Wochen oder mindestens 20 Wochen, im Wesentlichen konstant bleibt.
9. Dispersionsfarbe nach einem der vorstehenden Punkte, **dadurch gekennzeichnet, dass** die Dispersionsfarbe 2 bis 23 Gew.-%, insbesondere 4 bis 20 Gew.-%, Polymer enthält, jeweils bezogen auf das Gesamtgewicht der Dispersionsfarbe.
10. Dispersionsfarbe nach einem der vorstehenden Punkte, **dadurch gekennzeichnet, dass** das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält.
11. Dispersionsfarbe nach einem der vorstehenden Punkte, **dadurch gekennzeichnet, dass** die Dispersionsfarbe als weitere Additive Dispergier-, Netz-, Verdickungsmittel, Stabilisatoren, Entschäumer und/oder Hydrophobierungsmittel enthält.
12. Verfahren zur Herstellung einer Dispersionsfarbe nach einem der Punkte 1 bis 11, umfassend
   a. Bereitstellen einer Zusammensetzung enthaltend, jeweils bezogen auf das Gesamtgewicht der Zusammensetzung,
      i. 1 bis 15 Gew.-% Pigment,
      ii. 30 bis 60 Gew.-% Füllstoff,
      iii. 1 bis 25 Gew.-% Polymer,
      iv. 0,1 bis 3,5 Gew.-% Alkalimetallalkylsilikonat,
      v. 25 bis 70 Gew.-% Wasser,
   b. Dispergieren der in a. genannten Komponenten,
   c. Einstellen des pH Wertes auf einen Wert von 10 bis 12.
13. Verfahren nach Punkt 12, **dadurch gekennzeichnet, dass** die Zusammensetzung 0,1 bis 2 Gew.-%, insbesondere 0,3 bis 2 Gew.-% oder 0,5 bis 1,5 Gew.-%, jeweils bezogen auf das Gesamtgewicht der Zusammensetzung, Alkalimetallalkylsilikonat enthält und/oder dass das Alkalimetallalkylsilikonat Kaliummethylsilikonat ist und/oder dass das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon und/oder dass der Füllstoff durch mindestens ein Merkmal der Punkte 5 und 6 charakterisiert ist und/oder dass der pH Wert der Dispersionsfarbe von 10,5 bis 11,5, insbesondere von 10,5 bis 11,4, beträgt und/oder dass der pH Wert der Dispersionsfarbe über einen Zeitraum von mindestens 4 Wochen, insbesondere mindestens 8 Wochen oder mindestens 12 Wochen oder mindestens 16 Wochen oder mindestens 20 Wochen, im Wesentlichen konstant bleibt und/oder dass die Zusammensetzung 2 bis 23 Gew.-%, insbesondere 4 bis 20 Gew.-%, Polymer enthält, jeweils bezogen auf das Gesamtgewicht der Zusammensetzung und/oder dass das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält und/oder dass die Zusammensetzung als weitere Additive Dispergier-, Netz-, Verdickungsmittel, Stabilisatoren, Entschäumer und/oder Hydrophobierungsmittel enthält.
14. Verwendung einer Dispersionsfarbe nach einem der Punkte 1 bis 11 für den Innen- und/oder Außenbereich.
15. Verwendung von Alkalimetallalkylsilikonaten zur Stabilisierung von Dispersionsfarben.

## Patentansprüche

1. Dispersionsfarbe enthaltend, jeweils bezogen auf das Gesamtgewicht der Dispersionsfarbe,
a. 1 bis 15 Gew.-% Pigment,
b. 30 bis 60 Gew.-% Füllstoff,
c. 1 bis 25 Gew.-% Polymer,
d. 0,1 bis 3,5 Gew.-% Alkalimetallalkylsilikonat,
e. 25 bis 70 Gew.-% Wasser,
wobei der pH Wert der Dispersionsfarbe von 10 bis 12 beträgt.

2. Dispersionsfarbe nach Anspruch 1, **dadurch gekennzeichnet, dass** sie 0,1 bis 2 Gew.-%, insbesondere 0,3 bis 2 Gew.-% oder 0,5 bis 1,5 Gew.-%, jeweils bezogen auf das Gesamtgewicht der Dispersionsfarbe, Alkalimetallalkylsilikonat enthält.

3. Dispersionsfarbe nach Anspruch 1 oder 2, **dadurch gekennzeichnet, dass** das Alkalimetallalkylsilikonat Kaliummethylsilikonat ist.

4. Dispersionsfarbe nach einem der vorstehenden Ansprüche, **dadurch gekennzeichnet, dass** das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon.

5. Dispersionsfarbe nach einem der vorstehenden Ansprüche, **dadurch gekennzeichnet, dass** der Füllstoff ausgewählt ist aus der Gruppe bestehend aus Dolomit, Bariumsulfat, Feldspat, Quarz, Calciumcarbonat, Glimmer, Kaolin, kalziniertes Kaolin, Talkum, Diatomeenerde und Mischungen davon.

6. Dispersionsfarbe nach einem der vorstehenden Ansprüche, **dadurch gekennzeichnet, dass** der Füllstoff eine Mischung aus mindestens Calciumcarbonat und Kaolin ist.

7. Dispersionsfarbe nach einem der vorstehenden Ansprüche, **dadurch gekennzeichnet, dass** der pH Wert der Dispersionsfarbe von 10,5 bis 11,5, insbesondere von 10,5 bis 11,4, beträgt.

8. Dispersionsfarbe nach einem der vorstehenden Ansprüche, **dadurch gekennzeichnet, dass** der pH Wert der Dispersionsfarbe über einen Zeitraum von mindestens 4 Wochen, insbesondere mindestens 8 Wochen oder mindestens 12 Wochen oder mindestens 16 Wochen oder mindestens 20 Wochen, im Wesentlichen konstant bleibt.

9. Dispersionsfarbe nach einem der vorstehenden Ansprüche, **dadurch gekennzeichnet, dass** die Dispersionsfarbe 2 bis 23 Gew.-%, insbesondere 4 bis 20 Gew.-%, Polymer enthält, jeweils bezogen auf das Gesamtgewicht der Dispersionsfarbe.

10. Dispersionsfarbe nach einem der vorstehenden Ansprüche, **dadurch gekennzeichnet, dass** das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält.

11. Dispersionsfarbe nach einem der vorstehenden Ansprüche, **dadurch gekennzeichnet, dass** die Dispersionsfarbe als weitere Additive Dispergier-, Netz-, Verdickungsmittel, Stabilisatoren, Entschäumer und/oder Hydrophobierungsmittel enthält.

12. Verfahren zur Herstellung einer Dispersionsfarbe nach einem der Ansprüche 1 bis 11, umfassend
a. Bereitstellen einer Zusammensetzung enthaltend, jeweils bezogen auf das Gesamtgewicht der Zusammensetzung,
i. 1 bis 15 Gew.-% Pigment,
ii. 30 bis 60 Gew.-% Füllstoff,
iii. 1 bis 25 Gew.-% Polymer,
iv. 0,1 bis 3,5 Gew.-% Alkalimetallalkylsilikonat,
v. 25 bis 70 Gew.-% Wasser,
b. Dispergieren der in a. genannten Komponenten,
c. Einstellen des pH Wertes auf einen Wert von 10 bis 12.

13. Verfahren nach Anspruch 12, **dadurch gekennzeichnet, dass** die Zusammensetzung 0,1 bis 2 Gew.-%, insbesondere 0,3 bis 2 Gew.-% oder 0,5 bis 1,5 Gew.-%, jeweils bezogen auf das Gesamtgewicht der Zusammensetzung, Alkalimetallalkylsilikonat enthält und/oder dass das Alkalimetallalkylsilikonat Kaliummethylsilikonat ist und/oder dass das Pigment ausgewählt ist aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon und/oder dass der Füllstoff durch mindestens ein Merkmal der Ansprüche 5 und 6 charakterisiert ist und/oder dass der pH Wert der Dispersionsfarbe von 10,5 bis 11,5, insbesondere von 10,5 bis 11,4, beträgt und/oder dass der pH Wert der Dispersionsfarbe über einen Zeitraum von mindestens 4 Wochen, insbesondere mindestens 8 Wochen oder mindestens 12 Wochen oder mindestens 16 Wochen oder mindestens 20 Wochen, im Wesentlichen konstant bleibt und/oder dass die Zusammensetzung 2 bis 23 Gew.-%, insbesondere 4 bis 20 Gew.-%, Polymer enthält, jeweils bezogen auf das Gesamtgewicht der Zusammensetzung und/oder dass das Polymer mindestens ein Polymer und/oder Copolymer auf Basis von mindestens einem Monomer ausgewählt aus der Gruppe bestehend aus Acrylsäure, Acrylsäurederivate, Acrylsäureester, Methacrylsäure, Methacrylsäurederivate, Methacrylsäureester, Styrol, Styrolderivate, N-Vinylpyrrolidon, Acrylnitril, Vinylacetat, Vinylpropionat, ethylenisch ungesättigte Carbonsäuren, ethylenisch ungesättigte Carbonsäureester, ethylenisch ungesättigte Carbonsäureanhydride, ethylenisch ungesättigte Carbonsäureamide und Carbonsäurevinylester, enthält und/oder dass die Zusammensetzung als weitere Additive Dispergier-, Netz-, Verdickungsmittel, Stabilisatoren, Entschäumer und/oder Hydrophobierungsmittel enthält.

14. Verwendung einer Dispersionsfarbe nach einem der Ansprüche 1 bis 11 für den Innen- und/oder Außenbereich.

15. Verwendung von Alkalimetallalkylsilikonaten zur Stabilisierung von Dispersionsfarben.
